# EUROPEAN PATENT SPECIFICATION

(11) **EP 0 638 486 B1**
(45) Date of publication and mention of the grant of the patent: **23.10.1996**
(21) Application number: 94305730.7
(22) Date of filing: 02.08.1994
(51) Int. Cl.: B65D 81/34

(54) **Cartridge and method for the preparation of whipped beverages**
Patrone und Verfahren zur Zubereitung von verschäumten Getränken
Cartouche et méthode pour la préparation de boissons fouettées

(30) Priority: 11.08.1993 GB 9316717
(43) Date of publication of application: 15.02.1995
(73) Proprietor: KRAFT JACOBS SUCHARD LTD., Cheltenham, Glos, GL50 3AE (GB)
(72) Inventor: Gibbs, Andrew Robert, Warwickshire CV32 5HJ (GB); Ferguson, James, Banbury, Oxon OX15 4HY (GB); Holley, Edward John, Banbury, Oxon OX17 1EV (GB); MacMahon, Alistair John, Northants NN13 7ED (GB)
(74) Representative: Allard, Susan Joyce

(56) References cited:
- EP-A- 0 455 337

## Description

The present invention relates to a cartridge and method for the preparation of whipped beverages and, in particular, to sealed cartridges which are formed from substantially air- and water-impermeable materials and which contain one or more ingredients for the preparation of beverages and to a method of preparing whipped beverages from such cartridges.

It has previously been proposed to seal beverage preparation ingredients in individual air-impermeable packages. For example, cartridges or capsules containing compacted ground coffee are known for use in certain coffee making machines which are generally termed "espresso" machines. In the production of coffee using these coffee machines the coffee cartridge is placed in a brewing chamber and hot water is generally caused to pass under pressure through the cartridge, thereby extracting the aromatic coffee constituents from the ground coffee and producing a coffee beverage. Typically in the production of "espresso" coffee a brewing time of about 25 seconds is used at a pressure of about 6 x 10⁵ Pa.

Cartridges containing roast and ground coffee in which hot water flows under gravimetric force through the cartridge are also known. A cartridge of this general type is described in British Patent No. 1397116.

In our EP-A-0272922 there is described a package which contains at least one beverage preparation ingredient, e.g. roast and ground coffee. In a preferred embodiment the package is formed from a substantially air- and water-impermeable material and comprises a sealed body portion having a compartment containing the beverage ingredient and an outlet channel, the compartment and the outlet channel co-operating in such a manner that, in use, the beverage is filtered, thereby avoiding the necessity for an external filter.

There is also described in EP-A-0272922 a method for preparing a beverage which comprises positioning the beverage containing package at a brewing station, introducing water through water introduction means into the package, allowing the water to commingle with the beverage ingredient, and collecting the beverage so-formed through an outlet formed in the package.

The beverage packages as described in EP-A-0272922 are primarily intended to be used with a beverage preparation machine which handles the packages automatically or semi-automatically. A machine of this type is described in our EP-A-0334572. The packages may contain roast and ground coffee, leaf tea or one or more powdered beverage preparation ingredients such as powdered chocolate, powdered coffee or powdered soup.

The machines described in EP-A-0272922 operate at a relatively low pressure of less than 2 x 10⁵ Pa and thus, although by varying the amount of water introduced into packages containing roast and ground coffee it is possible to obain a coffee beverage of the same strength as "espresso" coffee, it is not possible to incorporate gases into the coffee beverage at this pressure to provide the beverage with the foamed texture and appearance of "espresso" coffee.

We have now developed a cartridge operating at relatively low pressures which is capable of producing whipped beverages.

Accordingly, the present invention provides a cartridge containing one or more beverage ingredients and being formed from substantially air- and water-impermeable materials, the said cartridge comprising an inlet for the introduction of an aqueous medium into the cartridge, a compartment containing the beverage ingredient or ingredients, an outlet for the beverage produced from the beverage ingredients characterised in that the cartridge includes whipping means provided in the path of the beverage prior to the outlet to whip the said beverage.

The cartridge which is used in the present invention may be of a known type, for example as described in EP-A-0272922 or EP-A-0455337, modified to include whipping means provided in the path of the beverage prior to the outlet.

The whipping means will preferably comprise an impeller which is adapted to engage an external driving device on the beverage preparation machine, for example a machine of the type as described in EP-A-0334573. The impeller may comprise a rotor with a plurality of radial vanes, for example from 4 to 8 radial vanes. The vanes may be regularly or irregularly spaced, flat or curled, or offset, as desired. Preferably the rotor is provided with a hollow drive shaft which is adapted for engagement with the external driving device. The rotor may be made from a moulded plastics material such as polyacetal, for example Delrin (Registered Trade Mark) from DuPont, or polyester, or from nylon.

Preferably the impeller is positioned in a whipping chamber integrally formed within the cartridge, the beverage being diverted through this chamber before passing to the outlet. The whipping chamber is preferably provided with a plurality of fixed vanes or ribs formed integrally with the walls thereof. The whipping chamber is preferably also provided with means to position the impeller therein, for example, a cylindrical hole into which a drive shaft on the impeller is adapted to fit.

The cartridge of the present invention preferably has a body portion which may be formed, for example, from a moulded plastics material such as polypropylene. The inlet and/or outlet of the cartridge may be closed by a plug of a plastics material moulded into the inlet and/or outlet nozzle during the moulding of the body portion. Alternatively, the inlet and/or outlet may be covered by a substantially air- and water-impermeable material, for example aluminium foil or a laminated material, such as a laminate of plastic material/metal foil/plastic material, prior to the opening of the inlet and/or outlet. Specific examples of materials which may be used are aluminium foil having a thickness in the range of from 30 to 60 micrometres coated with a layer of polypropylene or a laminate of polypropylene/aluminium foil/polyester.

The outlet in the cartridge may be prepared during the beverage preparation cycle using a cutting and piercing tool for example of the type as described in our EP-A-0334573.

Alternatively, the inlet and/or outlet may be open and the cartridge provided with an outer wrapping or the like. For example, a plurality of packages may be provided with a shrink wrapped outer layer.

In the cartridges of the present invention, the communication between the inlet and the compartment containing the beverage preparation ingredient(s) is preferably via a channel which is separated from the compartment by a wall which has a plurality of openings formed therein for the entry of a liquid medium into the compartment. The channel preferably extends along at least one side of the compartment, more preferably along three sides of the compartment. The openings in the wall are preferably in the form of elongate slots which are generally arranged in a manner such that an even distribution of the liquid medium through the beverage preparation ingredients is acheived.

The cartridge of the present invention may have a filter disposed between the compartment containing the beverage ingredient(s) and a least a part of the under surface of the top of the cartridge, one or more passages being formed between the filter and the top of the cartridge, the passages communicating with the outlet. This type of cartridge is particularly preferred when the beverage ingredient is roast and ground coffee.

The filter is preferably made from a material with a high wet strength, for example a non-woven polyester fibre material or polypropylene. Other materials which may be used include a water-permeable cellulosic material, such as a cellulosic material comprising woven paper fibres. The woven paper fibres may be admixed with fibres of polypropylene, polyvinyl-chloride and/or polyethylene. The incorporation of these plastics materials into the cellulosic material renders the cellulosic material heat-sealable. The filter material may also be coated with a material which is activated by heat and/or pressure so that it can readily be sealed to ribs formed in the under surface of the top of the package, thereby forming one or more passages which communicate with the outlet.

The beverage preparation ingredients contained in the cartridges of the invention are preferably roast and ground coffee, powdered chocolate, and according to individual taste, powdered milk or creamer, sugar or artificial sweetner.

It will be understood that it may be convenient for the compartment containing the beverage preparation ingredients to be separated into two or more sections, for example, one section containing roast and ground coffee and another section containing powdered milk or creamer. In such an arrangement the means for the entry of the liquid medium into the separate compartments would be varied to suit the requirements for filtration or dissolution of the particular ingredients.

The cartridge of the present invention, when filled with roast and ground coffee, preferably contains from 2.5 to 10 grams of roast and ground coffee, preferably from 4.5 to 7 grams for the preparation of a single cup. However, cartridges which are intended to provide multiple servings of coffee will contain an appropriate amount of roast and ground coffee, for example, packages intended to provide say five cups of coffee will contain from 20 to 50 grams of roast and ground coffee, preferably from 25 to 30 grams. The roast and ground coffee is generally compacted when the beverage package is filled in order to aid the distribution and transport of water through the package.

The cartridges of the present invention are preferably provided with at least one recognition means whereby, in use, the cartridge is identified by the machine into which it is placed for treatment and the identification of the cartridge thereby causes it to be subjected to the correct treatment steps including the introduction of the aqueous medium into the cartridge and the activation of the whipping means.

The recognition means may comprise one or more surface features formed in the body of the cartridge. For example, the cartridge body may be provided with one or more indents, cut outs, protrusions or holes which can be identified by a mechanical sensor in the beverage preparation machine, the mechanical sensor registering the presence or absence of the indents, cut outs, protrusions or holes.

The recognition means may, alternatively, comprise a system which can be sensed by a simple optical device, for example a bar code printed onto the body of the cartridge, a pattern of through holes in the cartridge, a pattern of contrasting tones or colours printed onto the cartridge or cartridges containing different comestibles being of different colours.

The recognition means may also comprise one or more strips of a magnetic material applied to the body of the cartridge which can be read by an appropriate magnetic sensor; one or more shaped or divided areas of metal foil applied to the cartridge body which cause an inductive effect on movement of the cartridge in the machine, which inductive effect can be sensed; or one or more electrically conductive areas formed on the body of the cartridge which can be sensed electrically.

As mentioned above, the cartridge of the present invention contains one or more beverage preparation ingredients, for example, roast and ground coffee or leaf tea and sugar and/or creamer, as desired. One machine which can readily be adapted for the preparation of a beverage from the preferred cartridge of the invention which includes a recognition means is described in our EP-A-0334573. The only modification required to be made to such a beverage preparation machine is to incorporate an appropriate sensor or sensors into it, the sensor or sensors being designed to read the particular coding on the cartridge and to send a signal to the controller, which then selects the appropriate beverage preparation cycle and activates the whipping means.

The sensor may be, for example, a mechanical sensor, an optical sensor, a magnetic sensor, an electrical sensor or an inductive sensor. The machine is preferably adapted so that the cartridge is handled automatically following its insertion into the machine.

The present invention also includes within its scope a method for the production of a whipped beverage from a cartridge containing one or more beverage ingredients, which method comprises introducing an aqueous medium into the cartridge, extracting constituents from the beverage ingredient(s) and/or dissolving the beverage ingredient(s) to form a beverage, whipping the beverage so produced and collecting the whipped beverage as it leaves the cartridge.

The whipping of the beverage, for example by means of an impeller, will generally incorporate air into the beverage to produce a foamy, frothy beverage. Beverages which can be produced in this manner are, for example, whipped chocolate and espresso-type coffee. Preferably the whipping of the beverage to incorporate air therein will result in from 5 to 30 percent by volume of air being incorporated into the beverage as bubbles having a bubble size preferably of below 300 micrometres, more preferably in the range of from 10 to 200 micrometres. Generally, whipped chocolate will incorporate a higher percentage of air by volume therein than whipped coffee.

Alternatively, the whipping of the beverage may be used to produce carbonated drinks. For example, the aqueous medium introduced into the cartridge may be carbonated water. On contact with powdered ingredients or a syrup for the preparation of a beverage the carbonated water will generally loose some of the carbon dioxide incorporated therein. The whipping of the beverage reintroduces into the beverage at least some of the carbon dioxide which has been lost from solution during the passage of the carbonated water through the cartridge. Alternatively, carbon dioxide may be introduced into the cartridge before the beverage is whipped, for example by direct passage into the chamber which contains the whipping means.

The present invention will be further described with reference to the accompanying drawings, in which:-
Figure 1 is a perspective view from above of a beverage cartridge of the invention;
Figure 2 is a perspective view from below of the beverage cartridge of Figure 1;
Figure 3 is a section through the beverage cartridge of Figure 1 along the lines III-III;
Figure 4 is a section through the beverage cartridge 1 along the line IV-IV;
Figure 5 illustrates one variant of an external driving mechanism;
Figure 6 illustrates another variant of an external driving mechanism;
Figure 7 illustrates a part of the driving mechanism of Figure 6 on a larger scale; and
Figure 8 illustrates a rotor of the beverage cartridge with which the driving mechanism engages.

Referring to the drawings, a cartridge of the present invention is shown generally at 1. The cartridge is mainly formed from a moulded plastics material and has a top 2 which may be decorated to identify the contents of the capsule, or which may have foil or paper laminated thereto with appropriate identification thereon. The bottom 3 of the capsule may be formed from an aluminium foil or a laminated foil.

The cartridge 1 has an inlet 4 and an outlet 5 which are formed in use of the cartridge by piercing or cutting the material covering the inlet and outlet openings.

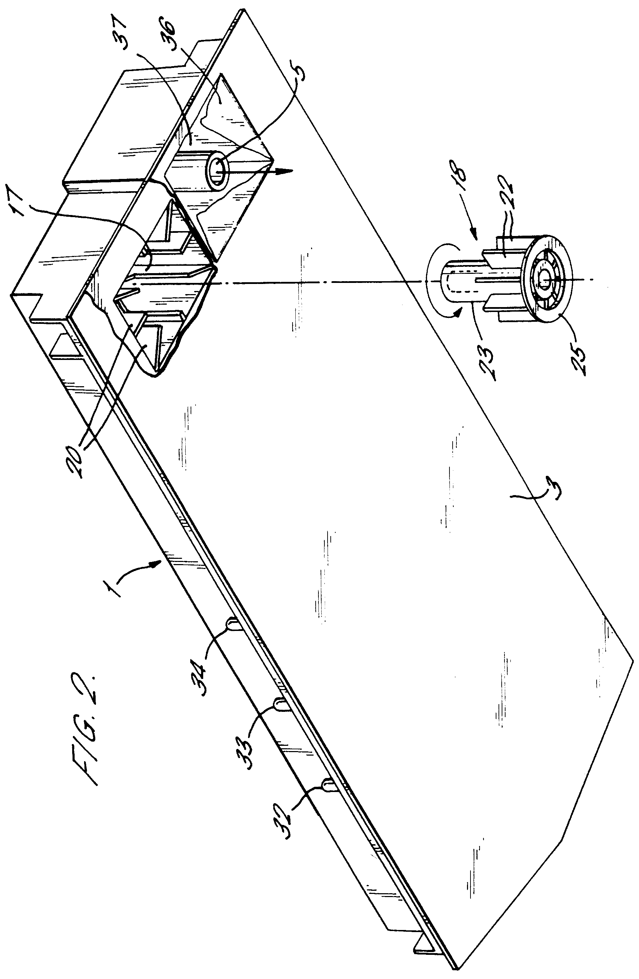

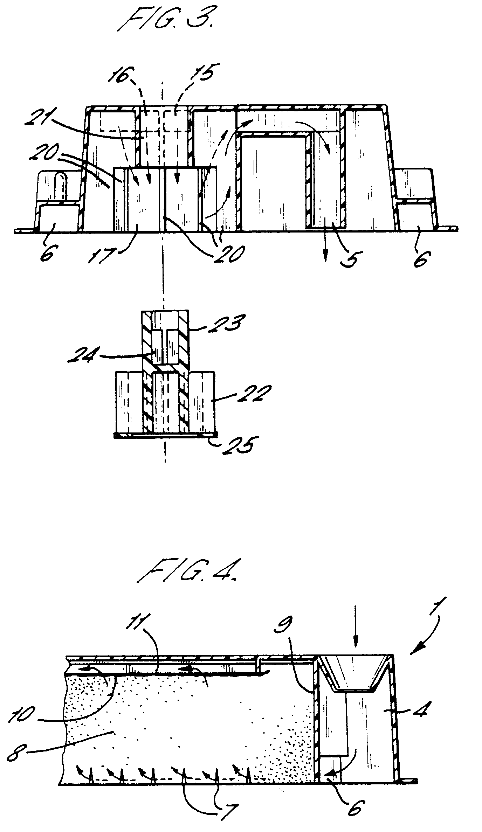

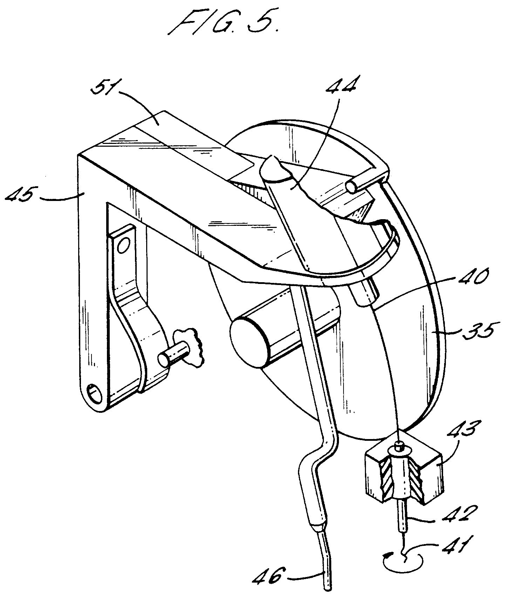

As best shown in Figure 4, water enters the cartridge 1 via inlet 4 where it enters channel 6 formed along the edges of the package and communicates via slots 7 with the beverage ingredients 8 which are contained in a compartment within the cartridge. The water mixes with the beverage preparation ingredients contained within compartment 9 and is forced upwardly through the beverage preparation ingredients. The beverage formed by passage of water through the beverage preparation ingredients passes through filter material 10 into a plurality of passages which are formed between ribs 12 onto which the filter paper is sealed. The sealing of the filter material onto ribs 12 prevents any short circuit and all of the beverage has to pass through the filter. The passages 11 are closed at the end remote from the outlet by transverse rib 13. The beverage collected via passages 11 is funneled in area 14 in the direction as shown by the arrows and passes through inlets 15 and 16 to a whipping chamber 17 in which a rotor 18 is disposed.

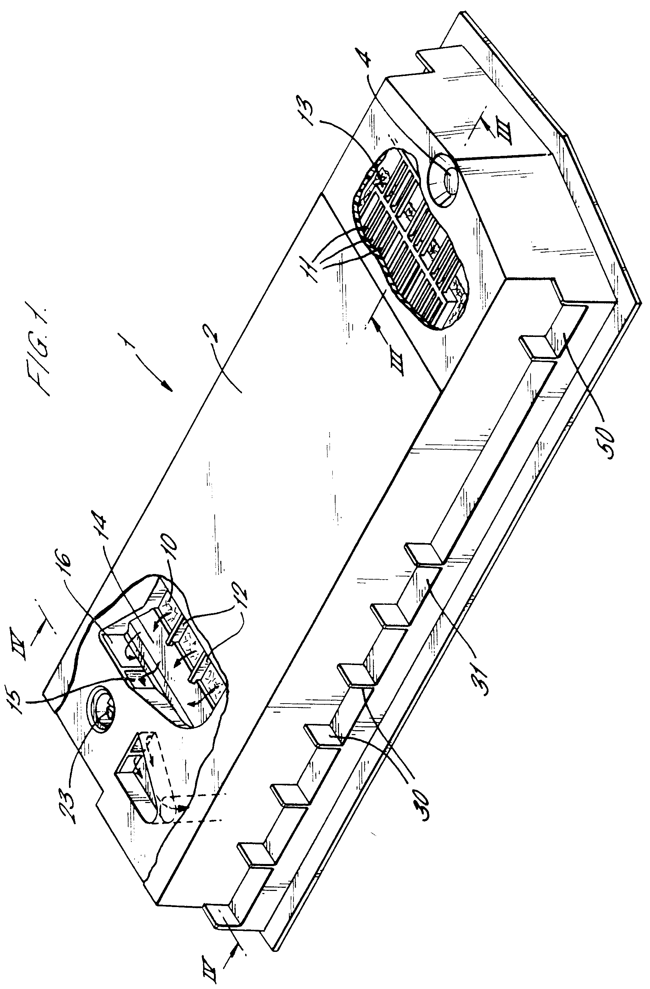

The whipping chamber 17 has a plurality of fixed vanes 20 provided therein, as best shown in Figure 2. The whipper chamber 17 is provided with a hole 21 into which rotor 18 is adapted to fit. The rotor 18 is provided with a plurality of vanes 22 positioned around the central hollow drive shaft 23. The hollow drive shaft 23 has ribs 24 which are adapted for engagement with an external driving device. The rotor has an annular ring 25 fixed to the bottom of the vanes 22 which, in use, is lubricated by the beverage and the film of liquid between the annular ring and the bottom surface 3 of the cartridge 1 acts as a bearing. The film of liquid assists in pushing the rotor upwards and assists in cooling the under surface of the ring 25.

The drive shaft 23 of rotor 18 engages by means of ribs 24, an external driving mechanism which causes the rotor to rotate at very high speeds, for example at a speed of from 10,000 to 20,000 rpm. Air is drawn into the whipping chamber by a passage through the space provided between the edges of the hole 21 and the drive shaft 23. The rotor 18 rotates freely in the whipping chamber 17 and the high speed of the rotor causes considerable turbulence with the passage of the rotor vanes 22 close to the fixed vanes 20 in whipping chamber 17. The rotation of the rotor 18 in whipping chamber 17 causes a centrifugal/centripetal effect on the beverage which causes a negative pressure in the area of the base of the shaft 23 of the rotor 18 which draws air into the whipping chamber 17. This has two benefits, namely it obviates the need for a seal on the shaft 23 and provides the air to incorporate into the beverage in the form of bubbles. The whipped beverage then exits from the whipping chamber 17 in the direction as shown by the arrows in Figure 3 to the outlet 5 from the capsule.

The cartridge as described with reference to Figures 1 to 4 is suitable for insertion into a beverage preparation machine, for example of the type as described in EP-A-0334573 longitudinally through a slot.

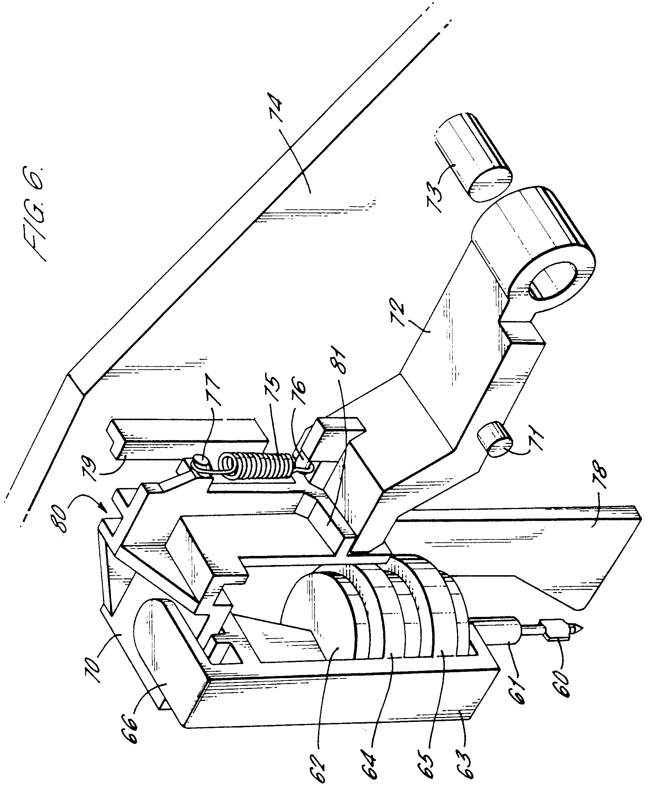

The cartridge is also provided, as best shown in Figure 1 with teeth 30 moulded along one side edge of the cartridge. The teeth 30 have recessess 31 formed therebetween. The teeth 30 are intended to enable the cartridge to be driven through a beverage preparation machine by the engagement of the teeth 30 with the tooth (not shown) of a cam 35 as shown in Figure 5.

The side edge of cartridge 1 opposite to the edge provided with teeth 30 has a plurality of pegs 32, 33 and 34 provided thereon. As the package is driven into the machine by the engagement of teeth 30 with cam 35, the presence or absence of the upstanding pegs 32, 33, 34 is sensed by a sensing arm (not shown). If one or more of pegs 32, 33, 34 is not present the sensing arm will thereby identify a different type of cartridge. The sensing arm operates a switch (not shown) which thereby transmits information concerning the presence or absence of the pegs on the package to the control mechanism for the beverage dispensing machine. The arrangement of pegs 32, 33, 34 on the cartridge thus identifies the type of cartridge to a controller which then selects the appropriate beverage preparation conditions.

When the beverage preparation machine has selected the appropriate beverage preparation conditions, the water inlet 4 of the package is pierced or cut, the outlet 5 in the package is uncovered and the foil 36 originally covering the outlet folded back into an outlet surround chamber 37. Water is caused to flow under pressure through the compartment containing the beverage ingredients and, after whipping, the chosen beverage is then collected in a cup or receptacle placed below the outlet 5 of the package.

The rotor 18 of the cartridge is driven by an external drive mechanism, one variant of which is shown in Figure 5. The external drive mechanism shown in Figure 5 comprises a drive wire 40 with a shaped end 41. The drive wire 40 is mounted through a sliding drive 42 and a bearing bush 43. The drive wire 40 is driven by motor 44 which is attached to a motor mounting arm 45. The flexible end 41 of driving wire 40 is adapted to pierce the foil covering the drive shaft 23 of the rotor and to engage the ribs 24 of the rotor 18. The flexibility of the drive wire 40 allows for some mis-alignment and also reduces noise which would be caused by any mis-alignment. The flexibility also allows for motor 44 to be non-critically mounted.

The high speed motor 44 is caused to move in an arc by a cam action from the main cam 35 of the brewing mechanism. The motor mounting arm 45 is also provided with a sensing arm 46 which senses the depth of the cartridge inserted into the brewing machine at location 50 thereof. If the depth of the ledge at 50 is the correct depth for the beverage to be produced from the capsule to require whipping, then the tip 41 of the drive wire will be caused to penetrate the foil covering the rotor drive shaft 23 and to engage the ribs 24 thereof. Accordingly, the brewing machine will then cause the motor 44 to be switched on and whip the beverage by means of the rotation of flexible drive 41 being transmitted to the rotor 18.

If the capsule is not of the type which requires whipping, i.e. if sensor 46 does not sense the correct depth of ledge 50, then an override spring arm 51 will be depressed, but the driving device will not penetrate the top foil of the cartridge and the motor 44 will not be activated.

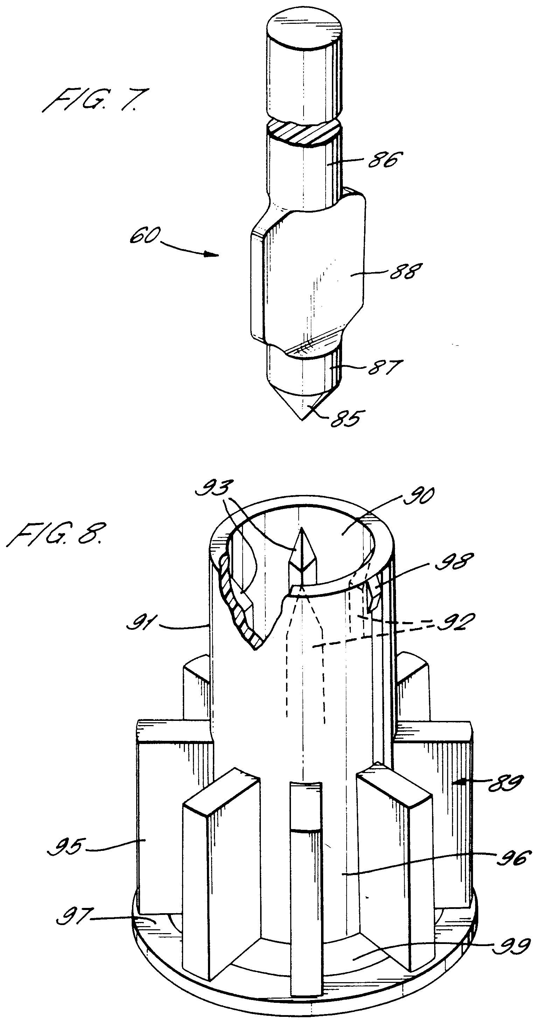

Referring to Figure 6, a second variant of an external drive mechanism is shown. The drive mechanism comprises a driving dog 60 which is attached through ferrule 61 to a motor 62. The motor is located within a motor mount 63 by means of claws 64 and 65. The upper arm 66 of the motor mount 63 has a spherical shaped under surface (not shown) which allows the motor to rock in all directions and therefore allows the alignment of the driving dog in the rotor shaft, as more fully described below with reference to Figures 7 and 8.

The motor mount 63 is supported by a motor carriage 70 via the spherical under surface of the upper arm 66 of the motor mount, allowing the motor angular motion as discussed above.

The operation of the device to engage the driving dog 60 of the rotor described below with reference to Figure 8 is driven by a track in the main cam of a brewing mechanism as described with reference to European Patent No. 0334573 (not shown). This cam operates a peg 71 in a cam follower lever 72 which pivots on a support 73 of the side plate 74 of the brewing mechanism. The position of the cam (not shown) ensures that the capsule is correctly placed before the lever 72 is operated. The lever 72 is moved downwards and causes the motor carriage to move downwards via a spring 75 one end of which is located on peg 76 of the cam follower lever and one end of which is located on peg 77 on the motor carriage 70. The motor carriage 70 is provided with a feeler blade 78 which is adapted to sense if the capsule is of the type the beverage from which will require whipping. When the capsule is of the correct type the feeler locates at a lower position on the capsule than if it is not of the correct type which allows the driving dog to press onto and pierce the foil covering the rotor drive shaft. The motor is then switched on due to the sensing of the correct capsule and the electrical and software control supplying power to the motor.

The movement of the motor carriage in the vertical direction is achieved by means of two guides positioned on the side plate 74 of the brewing mechanism. One guide 79 is shown which locates in a complementary slot 80 on the motor carriage. The other guide is not shown.

At the end of the brewing cycle, when the whipping of the beverage is complete, the cam follower lever 72 bears against the ledge 81 on the motor carriage thereby to ensure that the driving dog 60 is positively removed from the capsule by the action of the lever 72.

The driving dog 60 is shown on a larger scale in Figure 7. The driving dog has a pointed end 85 which is adapted to pierce the film which covers the aperture 90 of the rotor shown in Figure 8. The driving dog has a shaft 86 which is attached to the ferrule 61 shown in Figure 6. The pointed end 85 of the driving dog is attached via a section 87 of circular cross section to a flat section 88.

In operation, the driving dog pierces the film covering the aperture 90 of the rotor 89 and enters the hollow drive shaft 91 of the rotor 89. The drive shaft 91 of the rotor 89 is provided with two opposing pairs of splines 92 and 93 which centre section 87 of the driving dog. The pair of splines 92 are higher than the opposing pair of splines 93. This arrangement ensures that as the driving dog 60 enters the shaft 91 of the rotor 89 it is rotated until the shaft 88 is in aligned between, or to one side, of the two adjacent higher splines 92. This arrangement also prevents the flattened section 88 from attempting to pass down the same side of the opposing splines, particularly if the driving dog is entering at an angle.

The rotor 89 as shown in Figure 8 is provided with a plurality of blades 95 which are connected to the central shaft 96 of the rotor and at their lower outer edges to an annular ring 97 which also acts as a liquid bearing surface. A gap 99 is provided between the annular ring 97 and the central shaft 96 of the rotor which allows passage of liquid beneath the ring to assist in lubrication of the rotor as it bears against the bottom surface 3 of the cartridge.

The rotor 89 is also provided with a plurality of lugs 98, one of which is shown in Figure 8, which assist in retaining the rotor in the capsule during the manufacturing process by means of an interference fit within the hole 21 of the capsule into which the rotor fits (see Figure 3). Alternatively, the hole 21 may be provided with a shoulder (not shown) upon which the lugs 78 rest when the rotor is located in the hole during manufacture. The film of liquid between the bottom surface of the ring 97 and the surface 3 of the cartridge assists in pushing the rotor upwards within the hole 21 of the cartridge. In one embodiment where the hole 21 is provided with a shoulder on which lugs 98 rest, the upwards movement of the rotor prevents the lugs from rubbing on the shoulder and, as previously described, assists in cooling the under surface of the annular ring 97.

## Claims

1. A cartridge (1) containing one or more beverage ingredients (8) and being formed from substantially air- and water-impermeable materials, the said cartridge (1) comprising an inlet (4) for the introduction of an aqueous medium into the cartridge, a compartment containing the beverage ingredient or ingredients, an outlet (5) for the beverage produced from the beverage ingredients characterised in that the cartridge includes whipping means (18) provided in the path of the beverage prior to the outlet (5), to whip the said beverage.

2. A cartridge as claimed in claim 1 wherein the whipping means (18) comprises an impeller (23,24) adapted to engage an external driving device (40, 41, 60).

3. A cartridge as claimed in claim 2 wherein the impeller comprises a rotor (18) with a plurality of radial vanes(22).

4. A cartridge as claimed in claim 3 wherein the rotor (18) has a hollow drive shaft adapted for engagement with the external driving device (40, 41, 60).

5. A cartridge as claimed in any one of the preceding claims wherein the whipping means is positioned in a chamber (17) integrally formed within the cartridge (1).

6. A cartridge as claimed in claim 5 wherein the chamber (17) has a plurality of fixed vanes (20) provided therein.

7. A cartridge as claimed in any one of the preceding claims wherein the inlet (4) and/or outlet (5) is covered by a substantially air- and water-impermeable material prior to the formation, in use , of the inlet (4) and/or outlet (5) in the cartridge (1).

8. A cartridge as claimed in any one of the preceding claims wherein a channel (6) communicates with the inlet (4) for the entry of an aqueous medium into the cartridge, the channel (6) being separated from the compartment containing the beverage ingredient or ingredients (8) by a wall which has a plurality of openings (7) formed therein for the entry of the aqueous medium into the compartment containing the beverage preparation ingredient(s) (8).

9. A cartridge as claimed in claim 8 wherein the channel (6) extends along at least one side of the compartment containing the beverage preparation ingredient(s)(8).

10. A cartridge as claimed in claim 8 or claim 9 wherein the channel (6) extends around three sides of the compartment containing the beverage preparation ingredient(s)(8).

11. A cartridge as claimed in any one of claims 8 to 10 wherein the openings (7) comprise a plurality of elongate slots.

12. A cartridge as claimed in any one of the preceding claims wherein a filter (10) is disposed between the compartment and at least a part of the under surface of the top of the cartridge (1), one or more passages (11) being formed between the filter (10) and the top of the cartridge (1), which passage(s) (11) communicate(s) with the outlet (5).

13. A cartridge as claimed in claim 12 wherein the filter (10) is made from a water-impermeable material.

14. A cartridge as claimed in any of the preceding claims wherein the beverage preparation ingredient (8) is powdered chocolate or roast and ground coffee.

15. A cartridge as claimed in any one of the preceding claims which is provided with at least one recognition means (32,33,34) whereby, in use, the cartridge (1) is identified by the machine into which it is placed for treatment therefrom and the identification of the cartridge (1) thereby causes it to be subjected to the correct treatment steps including the introduction of a aqueous medium into the cartridge (1) and the engagement of the whipping means (18) by an external driving device (40,41,60) incorporated into the machine.

16. A cartridge as claimed in claim 15 wherein the recognition means (32,33,34) comprises one or more surface features formed in the body of the cartridge (1).

17. A method for the production of a whipped beverage from a cartridge (1) containing one or more beverage ingredients (8), which method comprises introducing an aqueous medium into the cartridge (1), extracting constituents from the beverage ingredient(s) (8) and/or dissolving the beverage ingredient(s) (8) to form a beverage, whipping the beverage so produced and collecting the whipped beverage as it leaves the cartridge (1).

18. A method as claimed in claim 17 wherein the beverage is whipped by means of an impeller (18).

19. A method as claimed in claim 17 or claim 18 wherein the whipping of the beverage incorporates air therein.

20. A method as claimed in claim 17 or claim 18 wherein carbon dioxide is introduced into the cartridge before the beverage is whipped.

21. A method as claimed in claim 17 or claim 18 wherein the aqueous medium is carbonated water and the whipping of the beverage reintroduces into the beverage any carbon dioxide lost from solution during the passage of the aqueous medium through the cartridge.

22. A method as claimed in any one of claims 17 to 19 wherein the beverage produced is whipped chocolate or espresso-type coffee.

## Patentansprüche

1. Patrone (1), die einen oder mehrere Getränkebestandteile (8) enthält und aus im wesentlichen luft- und wasserundurchlässigen Materialien gebildet ist, wobei die Patrone (1) umfaßt: einen Einlaß (4) für die Einführung eines wäßrigen Mediums in die Patrone, eine den Getränkebestandteil oder die -bestandteile enthaltende Kammer, einen Auslaß (5) für das aus den Getränkebestandteilen erzeugte Getränk,
dadurch gekennzeichnet, daß die Patrone ein Aufschäummittel (18) umfaßt, das in dem Weg des Getränks vor dem Auslaß (5) vorgesehen ist, um das Getränk aufzuschäumen.

2. Patrone nach Anspruch 1, bei welcher das Aufschäummittel (18) ein Flügelrad (23, 24) umfaßt, welches zum Eingriff mit einer externen Antriebsvorrichtung (40, 41, 60) ausgeführt ist.

3. Patrone nach Anspruch 2, bei welcher das Flügelrad einen Rotor (18) mit einer Mehrzahl von radialen Flügeln (22) umfaßt.

4. Patrone nach Anspruch 3, bei welcher der Rotor (18) eine hohle Antriebswelle aufweist, die zum Eingriff mit der externen Antriebsvorrichtung (40, 41, 60) ausgeführt ist.

5. Patrone nach einem der vorhergehenden Ansprüche, bei welcher das Aufschäummittel in einer Kammer (17) angeordnet ist, die in der Patrone (1) integral ausgebildet ist.

6. Patrone nach Anspruch 5, bei welcher die Kammer (17) eine Mehrzahl von darin vorgesehenen festen Flügeln (20) aufweist.

7. Patrone nach einem der vorhergehenden Ansprüche, bei welcher der Einlaß (4) und/oder der Auslaß (5) - vor der Bildung des Einlasses (4) und/oder des Auslasses (5) in der Patrone (1) bei Verwendung - von einem im wesentlichen luft- und wasserundurchlässigen Material abgedeckt ist.

8. Patrone nach einem der vorhergehenden Ansprüche, bei welcher ein Kanal (6) mit dem Einlaß (4) für den Eintritt eines wäßrigen Mediums in die Patrone in Verbindung steht, wobei der Kanal (6) von der den Getränkebestandteil oder die -bestandteile (8) enthaltenden Kammer durch eine Wand getrennt ist, in der für den Eintritt des wäßrigen Mediums in die den Getränkezubereitungsbestandteil bzw. die - bestandteile (8) enthaltende Kammer eine Mehrzahl von Öffnungen (7) ausgebildet sind.

9. Patrone nach Anspruch 8, bei welcher sich der Kanal (6) entlang wenigstens einer Seite der den Getränkezubereitungsbestandteil bzw. die -bestandteile (8) enthaltenden Kammer erstreckt.

10. Patrone nach Anspruch 8 oder 9, bei welcher sich der Kanal (6) um drei Seiten der den Getränkezubereitungsbestandteil bzw. die -bestandteile (8) enthaltenden Kammer erstreckt.

11. Patrone nach einem der Ansprüche 8 bis 10, bei welcher die Öffnungen (7) eine Mehrzahl von länglichen Schlitzen umfassen.

12. Patrone nach einem der vorhergehenden Ansprüche, bei welcher ein Filter (10) zwischen der Kammer und wenigstens einem Teil der unteren Fläche der Oberseite der Patrone (1) angeordnet ist, wobei ein oder mehrere Durchgänge (11) zwischen dem Filter (10) und der Oberseite der Patrone (1) gebildet sind, welcher bzw. welche Durchgänge (11) mit dem Auslaß (5) in Verbindung steht bzw. stehen.

13. Patrone nach Anspruch 12, bei welcher der Filter (10) aus einem wasserundurchlässigen Material hergestellt ist.

14. Patrone nach einem der vorhergehenden Ansprüche, bei welcher das Getränkezubereitungsbestandteil (8) Schokoladenpulver oder gerösteter und gemahlener Kaffee ist.

15. Patrone nach einem der vorhergehenden Ansprüche, die mit wenigstens einem Erkennungsmittel (32, 33, 34) versehen ist, durch welches die Patrone (1) bei Verwendung von der Maschine, in welche sie zur Behandlung durch diese eingesetzt ist, identifiziert wird und wobei die Identifizierung der Patrone (1) zur Folge hat, daß sie den richtigen Behandlungsschritten unterzogen wird, einschließlich der Einführung eines wäßrigen Mediums in die Patrone (1) und dem Eingriff einer externen Antriebsvorrichtung (40, 41, 60), die in der Maschine enthalten ist, mit dem Aufschäummittel (18) .

16. Patrone nach Anspruch 15, bei welcher das Erkennungsmittel (32, 33, 34) ein oder mehrere Oberflächenmerkmale umfaßt, die in dem Körper der Patrone (1) ausgebildet sind.

17. Verfahren zur Herstellung eines aufgeschäumten Getränks aus einer Patrone (1), die einen oder mehrere Getränkebestandteile (8) enthält, wobei das Verfahren umfaßt: das Einführen eines wäßrigen Mediums in die Patrone (1), das Extrahieren von Bestandteilen aus dem/den Getränkebestandteil(en) (8) und/oder das Auflösen des bzw. der Getränkebestandteile (8) zur Bildung eines Getränks, Aufschäumen des so erzeugten Getränks und Auffangen des aufgeschäumten Getränks, wenn es die Patrone (1) verläßt.

18. Verfahren nach Anspruch 17, bei welchem das Getränk mittels eines Flügelrads (18) aufgeschäumt wird.

19. Verfahren nach Anspruch 17 oder Anspruch 18, bei welchem durch das Aufschäumen des Getränks diesem Luft zugesetzt wird.

20. Verfahren nach Anspruch 17 oder 18, bei welchem vor dem Aufschäumen des Getränks Kohlensäure in die Patrone eingeführt wird.

21. Verfahren nach Anspruch 17 oder Anspruch 18, bei welchem das wäßrige Medium mit Kohlensäure versetztes Wasser ist und das Aufschäumen des Getränks in das Getränk Kohlensäure wieder einführt, die während des Durchtritts des wäßrigen Mediums durch die Patrone aus der Lösung verlorengegangen ist.

22. Verfahren nach einem der Ansprüche 17 bis 19, bei welchem das erzeugte Getränk aufgeschäumte Schokolade oder aufgeschäumter Kaffee vom Typ Espresso ist.

## Revendications

1. Cartouche (1) contenant un ou plusieurs ingrédient(s) de boisson (8) et réalisée en matières sensiblement imperméables à l'air et à l'eau, ladite cartouche (1) comprenant une admission (4) pour l'introduction d'un fluide aqueux dans la cartouche, un compartiment contenant l'ingrédient ou les ingrédients de boisson, une sortie (5) de la boisson produite à l'aide des ingrédients de la boisson, caractérisée en ce que la cartouche comprend un moyen de battage (18) placé sur le trajet de la boisson au-devant de la sortie (5) pour battre ladite boisson.

2. Cartouche selon la revendication 1, dans laquelle le moyen de battage (18) consiste en une roue à palettes (23, 24) conçue pour s'enclencher avec un dispositif extérieur d'entraînement (40, 41, 60).

3. Cartouche selon la revendication 2, dans laquelle la roue à palettes comprend un rotor (18) comportant plusieurs palettes radiales (22).

4. Cartouche selon la revendication 3, dans laquelle le rotor (18) comprend un arbre creux d'entraînement conçu pour s'enclencher sur le dispositif extérieur d'entraînement (40, 41, 60).

5. Cartouche selon l'une quelconque des revendications précédentes, dans laquelle le moyen de battage est placé dans une chambre (17) réalisée monobloc à l'intérieur de la cartouche (1).

6. Cartouche selon la revendication 5, dans laquelle la chambre (17) comporte intérieurement plusieurs palettes fixes (20).

7. Cartouche selon l'une quelconque des revendications précédentes, dans laquelle l'admission (4) et/ou la sortie (5) est recouverte d'une matière sensiblement imperméable à l'air et à l'eau avant la formation, à l'utilisation, de l'admission (4) et/ou de la sortie (5) de la cartouche (1).

8. Cartouche selon l'une quelconque des revendications précédentes, dans laquelle un canal (6) communique avec l'admission (4) pour l'entrée d'un fluide aqueux dans la cartouche, le canal (6) étant séparé du compartiment contenant l'ingrédient ou les ingrédients de la boisson (8) par une cloison qui comporte plusieurs trous (7) pour l'entrée du fluide aqueux dans le compartiment contenant l'ingrédient ou les ingrédients (8) de préparation de la boisson.

9. Cartouche selon la revendication 8, dans laquelle le canal (6) est disposé le long d'au moins un côté du compartiment contenant l'ingrédient ou les ingrédients (8) de préparation de la boisson.

10. Cartouche selon la revendication 8 ou la revendication 9, dans laquelle le canal (6) est disposé autour de trois côtés du compartiment contenant l'ingrédient ou les ingrédients (8) de préparation de la boisson.

11. Cartouche selon l'une quelconque des revendications 8 à 10, dans laquelle les trous (7) consistent en plusieurs fentes allongées.

12. Cartouche selon l'une quelconque des revendications précédentes, dans laquelle un filtre (10) est disposé entre le compartiment et au moins une partie de la surface inférieure de la surface supérieure de la cartouche (1), un ou plusieurs passages (11) étant réalisés entre le filtre (10) et la cloison supérieure de la cartouche (1), ledit ou lesdits passage(s) (11) communiquant avec la sortie (5).

13. Cartouche selon la revendication 12, dans laquelle le filtre (10) est réalisé en une matière imperméable à l'eau.

14. Cartouche selon l'une quelconque des revendications précédentes, dans laquelle l'ingrédient de préparation de la boisson (8) est du chocolat en poudre ou du café grillé et moulu.

15. Cartouche selon l'une quelconque des revendications précédentes, qui est équipée d'au moins un moyen de reconnaissance (32, 33, 34) de manière qu'à l'utilisation, la cartouche (1) soit identifiée par la machine dans laquelle elle est placée pour son traitement et que l'identification de la cartouche (1) par celle-ci lui fasse subir les étapes correctes de traitement, y compris l'introduction d'un fluide aqueux dans la cartouche (1) et l'enclenchement du moyen de battage (18) sur le dispositif extérieur d'entraînement (40, 41, 60) incorporé dans la machine.

16. Cartouche selon la revendication 15, dans laquelle le moyen de reconnaissance (32, 33, 34) comprend une ou plusieurs structure(s) de surface réalisé(es) dans le corps de la cartouche (1).

17. Procédé de production d'une boisson battue à partir d'une cartouche (1) contenant un ou plusieurs ingrédient(s) de boisson (8), ledit procédé comprenant l'introduction d'un fluide aqueux dans la cartouche (1), l'extraction des constituants de l'ingrédient ou des ingrédients de la boisson (8) et/ou la dissolution de l'ingrédient ou des ingrédients de la boisson (8) pour former une boisson, le battage de la boisson ainsi produite et la récupération de la boisson battue lorsqu'elle quitte la cartouche (1).

18. Procédé selon la revendication 17, suivant lequel la boisson est battue à l'aide d'une roue à palettes (18).

19. Procédé selon la revendication 17 ou la revendication 18, suivant lequel le battage de la boisson incorpore de l'air dans celle-ci.

20. Procédé selon la revendication 17 ou la revendication 18, suivant lequel de l'anhydride carbonique est introduit dans la cartouche avant que la boisson soit battue.

21. Procédé selon la revendication 17 ou la revendication 18, suivant lequel le fluide aqueux est de l'eau gazeuse et le battage de la boisson réintroduit dans la boisson tout anhydride carbonique perdu de la solution pendant le passage du fluide aqueux dans la cartouche.

22. Procédé selon l'une quelconque des revendications 17 à 19, suivant lequel la boisson produite est du chocolat ou du café de type expresso battu.
